# EUROPÄISCHE PATENTANMELDUNG

(11) **EP 1 930 849 A1**
(43) Veröffentlichungstag der Anmeldung: **11.06.2008**
(21) Anmeldenummer: 07023704.5
(22) Anmeldetag: 07.12.2007
(51) Int. Cl.: G06Q 10/00

(54) **System zur zumindest teilautomatischen Zusammenstellung von Speisen und/oder Getränken zur Bewirtung von Personen**

(30) Priorität: 07.12.2006 DE 102006058034
(71) Anmelder: Vodafone Holding GmbH, 40213 Düsseldorf (DE)
(72) Erfinder: Fueri Louisa Leontiades, 40212 Düsseldorf (DE)
(74) Vertreter: Weisbrodt, Bernd

(57) **Zusammenfassung**

Die vorliegende Erfindung betrifft ein System (1) zur zumindest teilautomatischen Zusammenstellung von Speisen und/oder Getränken zur Bewirtung von Personen mit einer Informationen von Rezepten von Speisen und/oder Getränken aufweisenden Datenbank (2), einer personenbezogene Informationen von zu bewirtenden Personen aufweisenden Datenbank (3), einer Informationen von bevorrateten Waren und/oder Dienstleistungen aufweisenden Datenbank (4), einer anhand von wenigstens einer Information von Rezepten von Speisen und/oder Getränken Waren und/oder Dienstleistungen zur Zubereitung von Speisen und/oder Getränken bestimmenden Einrichtung (5), einer zu beschaffende Waren und/oder Dienstleistungen zur Zubereitung von Speisen und/oder Getränken bestimmenden Einrichtung (6), einer Kosteninformationen für eine Bewirtung von Personen bestimmenden Einrichtung (7) und einer Anzeigeeinrichtung (9,12,13) zur Wiedergabe von Informationen.

## Beschreibung

Die vorliegende Erfindung betrifft ein System zur zumindest teilautomatischen Zusammenstellung von Speisen und/oder Getränken zur Bewirtung von Personen.

Im Stand der Technik sind verschiedene Systeme, Verfahren und Einrichtungen, welche ein über Kommunikationsnetze nutzbares Einkaufssystem für Waren- und/oder Dienstleistungen bereitstellen bekannt, beispielsweise aus der DE 102 05 067 A1. Darüber hinaus ist es bekannt, Rezepte beziehungsweise Kochbücher in elektronischer Form seitens mit Kommunikationsnetzwerken - wie dem Internet - verbindbarer Recheneinrichtungen zu nutzen.

Nachteilig bei den bisher bekannten Systemen, Verfahren und Einrichtungen sind deren jeweils für sich gegebenen Begrenzungen in möglichen Systemübergreifenden Anwendungen als auch deren mobile Nutzbarkeit.

Der Erfindung liegt in Anbetracht dieses Standes der Technik die Aufgabe zugrunde, auf einfache und kostengünstige Art und Weise eine verbesserte und umfangreichere Anwendung hinsichtlich einer zumindest teilautomatischen Zusammenstellung von Speisen und/oder Getränken zur Bewirtung von Personen zu ermöglichen, insbesondere um dem fortwährenden Bedarf nach derartigen Anwendungen gerecht zu werden.

Zur technischen Lösung wird mit der vorliegenden Erfindung ein System zur zumindest teilautomatischen Zusammenstellung von Speisen und/oder Getränken zur Bewirtung von Personen mit einer Informationen von Rezepten von Speisen und/oder Getränken aufweisenden Datenbank, einer personenbezogene Informationen von zu bewirtenden Personen aufweisenden Datenbank, einer Informationen von bevorrateten Waren und/oder Dienstleistungen aufweisenden Datenbank, einer anhand wenigstens einer Information von Rezepten von Speisen und/oder Getränken von Waren und/oder Dienstleistungen zur Zubereitung von Speisen und/oder Getränken Waren und/oder Dienstleistungen zur Zubereitung von Speisen und/oder Getränken bestimmenden Einrichtung, einer zu beschaffende Waren und/oder Dienstleistungen zur Zubereitung von Speisen und/oder Getränken bestimmenden Einrichtung, einer Kosteninformationen für eine Bewirtung von Personen bestimmenden Einrichtung und einer Anzeigeeinrichtung zur Wiedergabe von Informationen vorgeschlagen, wobei auf Basis wenigstens einer personenbezogenen Information wenigstens einer zu bewirtenden Person aus der personenbezogene Informationen von zu bewirtenden Personen aufweisenden Datenbank und/oder wenigstens einer Kosteninformation für eine Bewirtung von Personen wenigstens ein Rezept von Speisen und/oder Getränken aus der Informationen von Rezepten von Speisen und/oder Getränken aufweisenden Datenbank ausgewählt wird, anhand der Informationen des wenigstens einen ausgewählten Rezepts von Speisen und/oder Getränken Informationen von Waren und/oder Dienstleistungen für die Zubereitung der Speisen und/oder Getränke des wenigstens einen ausgewählten Rezepts von der Waren und/oder Dienstleistungen zur Zubereitung von Speisen und/oder Getränken bestimmenden Einrichtung unter Berücksichtigung wenigstens einer personenbezogenen Information bestimmt werden, anhand der bestimmten Informationen von Waren und/oder Dienstleistungen für die Zubereitung der Speisen und/oder Getränke des wenigstens einen ausgewählten Rezepts unter Berücksichtigung von Informationen von bevorrateten Waren und/oder Dienstleistungen und/oder wenigstens einer Kosteninformation für eine Bewirtung von Personen zu beschaffende Waren und/oder Dienstleistungen von der zu beschaffende Waren und/oder Dienstleistungen zur Zubereitung von Speisen und/oder Getränken bestimmenden Einrichtung bestimmt werden und die zu beschaffenden Waren und/oder Dienstleistungen wenigstens teilweise seitens der Anzeigeeinrichtung wiedergegeben werden.

Das erfindungsgemäße System ermöglicht insbesondere durch die erfindungsgemäße Verknüpfung der Informationen seiner Datenbanken mittels der Informationsbestimmungseinrichtungen eine umfangreiche und systemübergreifende Zusammenstellung von Speisen und/oder Getränken zur Bewirtung von Personen. Dabei wird mit dem erfindungsgemäßen System für den jeweiligen Anwender insbesondere ein Werkzeug bereitgestellt, insbesondere hinsichtlich Planung, Durchführung und/oder Ausführung als auch der Erstellung von Speisen und/oder Getränken zur Bewirtung von Personen.

Eine weitere vorteilhafte Ausgestaltung der Erfindung sieht vor, dass die personenbezogenen Informationen von zu bewirtenden Personen Informationen hinsichtlich Anzahl von Personen, Anlass einer Bewirtung, Vorlieben hinsichtlich der Bewirtung, zeitliche Dauer der Bewirtung und/oder Datum und/oder Uhrzeit der Bewirtung umfassen. Die erfindungsgemäß vorgesehene, personenbezogene Informationen von zu bewirtenden Personen aufweisende Datenbank umfasst insbesondere in der zu bewirtenden Person begründete Informationen, vorzugsweise hinsichtlich Vorlieben von Speisen, Allergien bezüglich bestimmter Lebensmittel, Ernährungsgewohnheiten beispielsweise hinsichtlich religiöser und/oder vegetarischer Lebensweisen, letzter Zeitpunkt einer Bewirtung, im Zusammenhang mit einer Bewirtung zusammengestellter Speisen und/oder Getränke und dergleichen Informationen. Darüber hinaus gehören zu den personenbezogenen Informationen Informationen wie Geburtstag, Familienstand, Anschrift, Erreichbarkeit bezüglich Internet, Mobilfunktelefon, Festnetztelefon oder dergleichen personenbezogene Informationen. So können seitens des erfindungsgemäßen Systems als personenbezogene Informationen beispielsweise Fitnessaktivitäten und/oder Programme von zu bewirtenden Personen Berücksichtigung in der Zusammenstellung von Speisen und/oder Getränken zur Bewirtung von Personen finden. Die genannten personenbezogenen Informationen können dabei vorteilhafterweise auch über eine separate Datenbank in das erfindungsgemäße System eingebunden sein. Eine besonders bevorzugte Ausgestaltung der Erfindung sieht die Berücksichtigung von Punktsystemen von Ernährungsprogrammen (beispielsweise Weight Watchers) vor.

Personenbezogene Informationen umfassen vorliegend darüber hinaus Informationen hinsichtlich der Anzahl zu bewirtender Personen, die vorteilhafterweise im Rahmen der Zusammenstellung von Waren und/oder Dienstleistungen für die Zubereitung von Speisen und/oder Getränken zu Bewirtung von Personen Berücksichtung finden, insbesondere hinsichtlich der erforderlichen Mengenangaben und/oder Zeitangaben für die Zubereitung entsprechender Speisen und/oder Getränke. Das erfindungsgemäße System erlaubt so vorteilhafterweise eine automatische Bestimmung erforderlicher Waren und/oder Dienstleistungen für die Zubereitung von Speisen und/oder Getränken zur Bewirtung von Personen.

Das erfindungsgemäße System erlaubt weiter auf Basis der zur Verfügung stehenden Informationen eine Zusammenstellung von Speisen und/oder Getränken zur Bewirtung von Personen eine Zusammenstellung von entsprechenden Speisen und/oder Getränken in Abhängigkeit von Ereignissen, beispielsweise Geburtstagsfeiern oder dergleichen Ereignissen und/oder Themen beispielsweise unter der Rubrik spanischer Abend, italienischer Abend oder dergleichen Themen. Eine weitere vorteilhafte Ausgestaltung der Erfindung sieht vor, dass die Informationen von Rezepten von Speisen und/oder Getränken Informationen hinsichtlich Thematiken einer Bewirtung, benötigte Waren und/oder Dienstleistungen von Speisen und/oder Getränken von Rezepten, Mengenangaben benötigter Waren und/oder Dienstleistungen von Speisen und/oder Getränken von Rezepten, vorzugsweise bezogen auf eine Person, und/oder die zeitliche Dauer der Zubereitung von Speisen und/oder Getränken von Rezepten umfassen.

Durch die Kosteninformationen für eine Bewirtung von Personen bestimmende Einrichtung ist das erfindungsgemäße System in der Lage, entsprechende Speisen und/oder Getränke im Vorfeld, dass heißt als Hauptauswahlkriterium und/oder im Nachhinein hinsichtlich der zu erwartenden Kosten, vorzugsweise hinsichtlich der zu erwartenden Gesamtkosten und/oder der Kosten pro zu bewirtender Person, zu kalkulieren. Entsprechend kalkulierte Informationen werden seitens der Anzeigeeinrichtung wiedergegeben. So kann bei Nutzung des erfindungsgemäßen Systems eine Zusammenstellung von Waren und/oder Dienstleistungen für die Zubereitung von Speisen und/oder Getränken zur Bewirtung von Personen der zu erwartende Kostenaufwand bestimmt werden.

Darüber hinaus ermöglicht das erfindungsgemäße System vorteilhafterweise eine Bestimmung des zeitlichen Aufwandes hinsichtlich der Vorbereitung beziehungsweise Zubereitung entsprechender Speisen und/oder Getränke zur Bewirtung von Personen. Eine weitere besonders vorteilhafte Ausgestaltung der Erfindung sieht die Berücksichtigung beziehungsweise einen Abgleich des beziehungsweise eines Terminplans des Nutzers des erfindungsgemäßen Systems hinsichtlich der zur Verfügung stehenden Zubereitungszeit beziehungsweise des zeitlichen Zubereitungsbedarfs von Speisen und/oder Getränken zu Bewirtung von Personen vor.

Eine besonders bevorzugte Ausgestaltung der Erfindung sieht vor, dass die Einrichtung zur Bestimmung von Kosteninformationen für eine Bewirtung von Personen ein von einem Nutzer des erfindungsgemäßen Systems über eine Eingabeeinrichtung einzugebendes Budget als Kosteninformation bestimmt, wobei das Budget ein vorzugsweise bezogen auf eine Person einzugebendes Budget ist.

Eine weitere vorteilhafte Ausgestaltung der Erfindung ist dadurch gekennzeichnet, dass die Einrichtung zur Bestimmung von Kosteninformationen für eine Bewirtung von Personen über eine Kommunikationsschnittstelle mit einer Waren und/oder Dienstleistungen anbietenden Einrichtung verbindbar ist, welche Kosteninformationen zu angebotenen Waren und/oder Dienstleistungen über die Kommunikationsschnittstelle bereitstellt. So kann das erfindungsgemäße System vorteilhafterweise mit entsprechenden Waren und/oder Dienstleistungen bereitstellenden Einrichtungen verbunden werden und aktuell Kosteninformationen von Waren und/oder Dienstleistungen für die Zubereitung von Speisen und/oder Getränken benötigter Waren und/oder Dienstleistungen einbinden und entsprechend berücksichtigen. So können beispielsweise von mit dem System verbindbaren Supermärkten oder dergleichen Verkaufseinrichtungen entsprechende aktuelle Angebote von Waren in die Zusammenstellung von Speisen und/oder Trinken zur Bewirtung von Personen mit berücksichtigt werden beziehungsweise aufgrund derselbigen die Zusammenstellung erfolgen.

Vorteilhafterweise erfolgt seitens des erfindungsgemäßen Systems ein Abgleich zwischen seitens des Nutzers des erfindungsgemäßen Systems bevorrateten Waren und/oder Dienstleistungen für die Zubereitung von Speisen und/oder Getränken zur Bewirtung von Personen mit noch benötigten Waren und/oder Dienstleistungen zur Zubereitung von Speisen und/oder Getränken zur Bewirtung von Personen. Dem Nutzer des erfindungsgemäßen Systems wird so beispielsweise seitens der Anzeigeeinrichtung angezeigt, welche Waren und/oder Dienstleistungen er noch für die Zubereitung von Speisen und/oder Getränken zur Bewirtung von Personen benötigt und wo er diese zu welchem Preis erwerben kann.

Eine besonders bevorzugte Ausgestaltung der Erfindung sieht vor, dass die Kommunikationsschnittstelle der Einrichtung zur Bestimmung von Kosteninformationen für eine Bewirtung von Personen ein Kommunikationsnetzwerk, vorzugsweise ein digitales Mobilfunknetzwerk gemäß einem GSM- und/oder UMTS-Funknetzstandard, nutzend ausgebildet ist. Eine besonders bevorzugte Ausgestaltung der Erfindung ist dadurch gekennzeichnet, dass die wenigstens eine Anzeigeeinrichtung, die Eingabeeinrichtung und/oder die Kommunikationsschnittstelle des erfindungsgemäßen Systems von einem in einem Mobilfunknetz betreibbaren mobilen Endgerät bereitgestellt sind. Bei entsprechender Anwendung des erfindungsgemäßen Systems seitens eines in einem Mobilfunknetz betreibbaren mobilen Endgerätes in Form eines Mobilfunktelefons oder dergleichen Endgerätes ist so vorteilhafterweise eine Zusammenstellung von Speisen und/oder Getränken zur Bewirtung von Personen mobil ermöglicht, wobei im Rahmen der noch zu beschaffenden Waren und/oder Dienstleistungen vorteilhafterweise seitens der Anzeigeeinrichtung des entsprechenden Endgerätes neben den Informationen zur Zubereitung der Speisen und/oder Getränke, der dazu erforderlichen Waren und/oder Dienstleistungen und/oder der Kosteninformationen ferner eine automatisierte Wegbeschreibung, ein sogenannter Routenplaner, mit in die Planung integrierbar ist, so dass der Nutzer beispielsweise von seinem Arbeitsplatz auf dem Weg nach Hause automatisch die Supermärkte oder dergleichen Waren und/oder Dienstleistungen anbietenden Einrichtungen anfahren und entsprechende Waren und/oder Dienstleistungen zur Zubereitung der Speisen und/oder Getränke erwerben kann. Eine weitere besonders vorteilhafte Ausgestaltung der Erfindung sieht vor, dass der Nutzer des erfindungsgemäßen Systems entsprechend benötigte Waren und/oder Dienstleistungen vorteilhafterweise unter Nutzung der Kommunikationsschnittstelle direkt bei den entsprechende Waren und/oder Dienstleistungen anbietenden beziehungsweise bereitstellenden Einrichtungen, insbesondere Supermärkten oder dergleichen Einrichtungen, vorbestellen und zusammenstellen lassen kann. Erfindungsgemäß wird so die Zusammenstellung der Waren und/oder Dienstleistungen für den Nutzer weiter vereinfacht und insbesondere der zeitliche Aufwand reduziert.

Weitere Einzelheiten, Merkmale und Vorteile der Erfindung werden nachfolgend anhand des in der Figur der Zeichnung dargestellten Ausführungsbeispiels näher erläutert. Dabei zeigt:

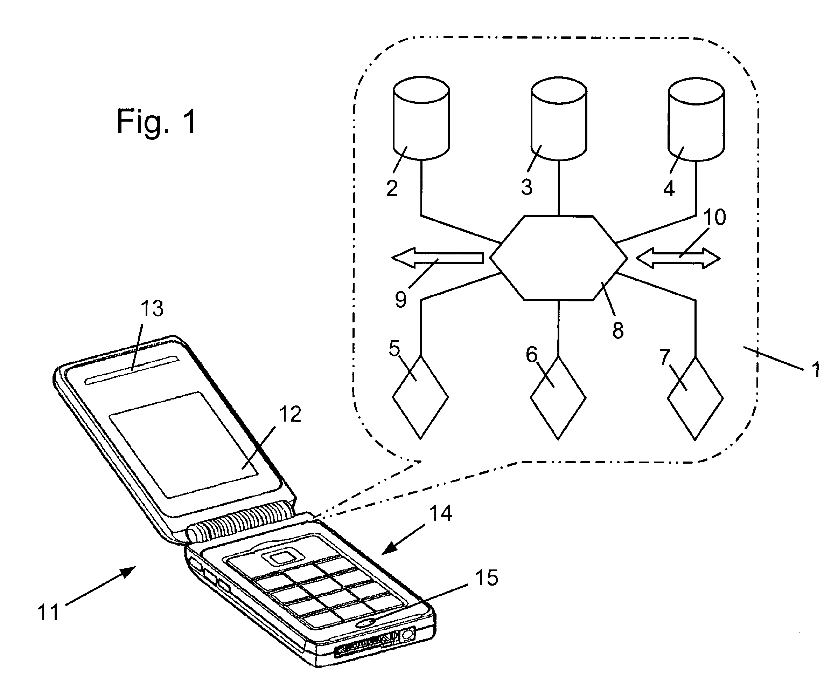

- Fig. 1: in einer schematischen Darstellung den Aufbau eines erfindungsgemäßen Systems zur zumindest teilautomatischen Zusammenstellung von Speisen und/oder Getränken zur Bewirtung von Personen.

Fig. 1 zeigt ein Ausführungsbeispiel eines erfindungsgemäßen Systems 1 zur zumindest teilautomatischen Zusammenstellung von Speisen und/oder Getränken zur Bewirtung von Personen. Das System 1 ist vorliegend seitens eines in einem Mobilfunknetz betreibbaren mobilen Endgerätes 11, vorliegend einem Mobilfunktelefon 11, implementiert. Die Implementierung manifestiert sich vorliegend in einem seitens des Mobilfunktelefons 11 ausführbaren Anwendungsprogramms, welches die Anzeigeeinrichtungen 12 und 13 sowie die Eingabeeinrichtungen 14 und 15 des Mobilfunktelefons 11 nutzt. Die Anzeigeeinrichtung 12 ist als Display ausgebildet. Die Anzeigeeinrichtung 13 ist als Lautsprecher ausgebildet. Die Eingabeeinrichtung 14 ist als eine mehrere Tasten ausweisende Tastatur ausgebildet. Die Eingabeeinrichtung 15 ist als ein Mikrofon ausgebildet.

Das System 1 zur zumindest teilautomatischen Zusammenstellung von Speisen und/oder Getränken zur Bewirtung von Personen weist vorliegend eine Informationen von Rezepten von Speisen und/oder Getränken aufweisende Datenbank 2, eine personenbezogene Informationen von zu bewirtenden Personen aufweisende Datenbank 3, eine Informationen von bevorrateten Waren und/oder Dienstleistungen aufweisende Datenbank 4, eine Einrichtung 5 zur Bestimmung von Waren und/oder Dienstleistungen zur Zubereitung von Speisen und/oder Getränken anhand wenigstens einer Information von Rezepten von Speisen und/oder Getränken, eine zu beschaffende Waren und/oder Dienstleistungen zur Zubereitung von Speisen und/oder Getränken bestimmende Einrichtung 6, eine Kosteninformationen für eine Bewirtung von Personen bestimmenden Einrichtung 7 und einer Anzeigeeinrichtung 9 zur Wiedergabe von Informationen, welche vorliegend von dem Display 12 und dem Lautsprecher 13 des Mobilfunktelefons 11 - wie bereits erläutert - bereitgestellt sind, auf. Die Datenbanken 2 bis 4 und die Einrichtungen 5 bis 7 des Systems 1 sind vorliegend über eine Kontroll- und/oder Steuereinrichtung 8 des Systems 1 miteinander verbunden. Die Kontroll- und/oder Steuereinrichtung 8 des Systems 1 weist ferner eine Kommunikationsschnittstelle 10 auf, welche vorliegend von dem Mobilfunktelefon 11 bereitgestellt ist. Über die Kommunikationsschnittstelle 10 ist das System 1 beziehungsweise sind die Einrichtungen 5 bis 7 des Systems 1 unter Nutzung der Kontroll- und/oder Steuereinrichtung 8 mit dem Mobilfunknetz und/oder mit über das Mobilfunknetz erreichbaren Kommunikationsnetzwerken, beispielsweise dem Internet, verbindbar. Die Einrichtungen 5 bis 7 können so mitunter nicht in den Datenbanken 2 bis 4 enthaltende Informationen aus seitens des Mobilfunknetzes und/oder dergleichen Kommunikationsnetzwerken, insbesondere dem Internet, in Datenbanken bereitgehaltene Informationen abrufen und/oder an diese senden. So sind über die Kommunikationsschnittstelle 10 unter Nutzung des Systems 1 über das Mobilfunktelefon 11 unter Nutzung des Mobilfunknetzes beispielsweise Waren und/oder Dienstleistungen in einem Supermarkt bestellbar. Ferner können Preisinformationen von Waren und/oder Dienstleistungen über die Kommunikationsschnittstelle 10 aus entsprechenden Kommunikationsnetzwerken eingeholt werden.

Eine weitere vorteilhafte Ausgestaltung der Erfindung sieht vor, dass die Datenbanken 2 bis 4 des erfindungsgemäßen Systems dezentral des Mobilfunktelefons 11 oder dergleichen Einrichtungen vorgehalten sind. Die in den Datenbanken 2 bis 4 vorhandenen Informationen können dann von dem erfindungsgemäßen System 1 über die Kommunikationsschnittstelle 10 aus dem Mobilunknetz und/oder dergleichen Kommunikationsnetzwerken, welche entsprechende Datenbanken 2 bis 4 allgemein und/oder individuell für den Nutzer des Mobilfunktelefons 11 beziehungsweise des Systems 1 bereithalten, abgerufen werden.

Die Kontroll- und/oder Steuereinrichtung 8 des Systems 1 wählt vorliegend auf Basis wenigstens einer personenbezogenen Information wenigstens einer zu bewirtenden Person, welche mittels der Eingabeeinrichtungen 14 beziehungsweise 15 des Mobilfunktelefons 11 erfasst werden, aus der personenbezogenen Informationen von zu bewirtenden Personen aufweisenden Datenbank 3 und/oder wenigstens einer Kosteninformation für eine Bewirtung von Personen, wobei die Kosteninformation vorliegend beispielsweise über die Eingabeeinrichtungen 14 und/oder 15 des Mobilfunktelefons 11 mittels der Einrichtung 7 erfasst werden, wenigstens ein Rezept von Speisen und/oder Getränken aus der Informationen von Rezepten von Speisen und/oder Getränken aufweisenden Datenbank 2 aus.

Anhand der Informationen des wenigstens einen ausgewählten Rezepts aus der Datenbank 2 werden von der Einrichtung 5 zur Bestimmung von Waren und/oder Dienstleistungen zur Zubereitung von Speisen und/oder Getränken entsprechend benötigte Waren und/oder Dienstleistungen zur Zubereitung des ausgewählten Rezepts bestimmt. Die Bestimmung erfolgt vorteilhafterweise durch mehrere Datenbankabgleiche und/oder Vergleichsoperationen, welche von der Kontroll- und/oder Steuereinrichtung 8 des Systems 1 koordiniert werden. Anhand der für die Zubereitung der Speisen und/oder Getränke des ausgewählten Rezepts bestimmten Informationen von Waren und/oder Dienstleistungen für die Zubereitung werden weiter unter Berücksichtigung von Informationen von von dem Nutzer des Systems 1 bevorrateten Waren und/oder Dienstleistungen durch Abfrage der entsprechenden Informationen aus der Datenbank 4 und/oder unter Berücksichtigung wenigstens einer Kosteninformation für eine Bewirtung von Personen, welche vorliegend mittels der Einrichtung 7 des Systems 1 bestimmt wird, ermittelt, welche Waren und/oder Dienstleistungen für die Zubereitung des ausgewählten Rezepts noch ergänzend mit dem bevorrateten Waren und/oder Dienstleistungen zu beschaffen sind. Die so ermittelten zu beschaffenden Waren und/oder Dienstleistungen werden dem Nutzer des erfindungsgemäßen Systems seitens der Anzeigeeinrichtungen 12 und/oder 13 des Mobilfunktelefons 11 wiedergegeben.

Vorteilhafterweise können fehlende Waren und/oder Dienstleistungen von dem Nutzer des erfindungsgemäßen Systems 1 und über das Mobilfunknetz unter Nutzung des Mobilfunktelefons 11 direkt bei einem entsprechende Waren und/oder Dienstleistungen anbietenden und/oder bereithaltenden Anbieter bestellt werden. Entsprechende Waren und/oder Dienstleistungen können dann von dem Nutzer des Systems 1 abgeholt werden oder an diesen automatisch geliefert werden.

Das in der Figur der Zeichnung dargestellte Ausführungsbeispiel und die im Zusammenhang mit diesem beschriebenen Anwendungsbeispiele dienen lediglich der Erläuterung der Erfindung und sind für diese nicht beschränkend.

### Bezugszeichenliste:

- 1: System zur zumindest teilautomatischen Zusammenstellung von Speisen und/oder Getränken zur Bewirtung von Personen
- 2: Datenbank (Rezepte)
- 3: Datenbank (personenbezogene Informationen)
- 4: Datenbank (bevorratete Waren und/oder Dienstleistungen)
- 5: Einrichtung zur Bestimmung von Waren und/oder Dienstleistungen zur Zubereitung von Speisen und/oder Getränken
- 6: Einrichtung zur Bestimmung von zu beschaffenden Waren und/oder Dienstleistungen zur Zubereitung von Speisen und/oder Getränken
- 7: Einrichtung zur Bestimmung von Kosteninformationen (Bewirtungskosten)
- 8: Kontroll- und/oder Steuereinrichtung (System (1))
- 9: Anzeigeeinrichtung/Schnittstelle zu Anzeigeeinrichtungen
- 10: Kommunikationsschnittstelle
- 11: mobiles Endgerät/Mobilfunktelefon
- 12: Anzeigeeinrichtung/Display
- 13: Anzeigeeinrichtung/Lautsprecher
- 14: Eingabeeinrichtung/Tastatur
- 15: Eingabeeinrichtung/Mikrofon

## Patentansprüche

1. System (1) zur zumindest teilautomatischen Zusammenstellung von Speisen und/oder Getränken zur Bewirtung von Personen mit
einer Informationen von Rezepten von Speisen und/oder Getränken aufweisenden Datenbank (2),
einer personenbezogene Informationen von zu bewirtenden Personen aufweisenden Datenbank (3),
einer Informationen von bevorrateten Waren und/oder Dienstleistungen aufweisenden Datenbank (4),
einer anhand von wenigstens einer Information von Rezepten von Speisen und/oder Getränken Waren und/oder Dienstleistungen zur Zubereitung von Speisen und/oder Getränken bestimmenden Einrichtung (5),
einer zu beschaffende Waren und/oder Dienstleistungen zur Zubereitung von Speisen und/oder Getränken bestimmenden Einrichtung (6),
einer Kosteninformationen für eine Bewirtung von Personen bestimmenden Einrichtung (7) und
einer Anzeigeeinrichtung (9, 12, 13) zur Wiedergabe von Informationen,
wobei
auf Basis wenigstens einer personenbezogenen Information wenigstens einer zu bewirtenden Person aus der personenbezogene Informationen von zu bewirtenden Personen aufweisenden Datenbank (3) und/oder wenigstens einer Kosteninformation für eine Bewirtung von Personen wenigstens ein Rezept von Speisen und/oder Getränken aus der Informationen von Rezepten von Speisen und/oder Getränken aufweisenden Datenbank (2) ausgewählt wird,
anhand der Informationen des wenigstens einen ausgewählten Rezepts von Speisen und/oder Getränken Informationen von Waren und/oder Dienstleistungen für die Zubereitung der Speisen und/oder Getränke des wenigstens einen ausgewählten Rezepts von der Waren und/oder Dienstleistungen zur Zubereitung von Speisen und/oder Getränken bestimmenden Einrichtung (5) unter Berücksichtigung wenigstens einer personenbezogenen Information bestimmt werden,
anhand der bestimmten Informationen von Waren und/oder Dienstleistungen für die Zubereitung der Speisen und/oder Getränke des wenigstens einen ausgewählten Rezepts unter Berücksichtigung von Informationen von bevorrateten Waren und/oder Dienstleistungen und/oder wenigstens einer Kosteninformation für eine Bewirtung von Personen zu beschaffende Waren und/oder Dienstleistungen von der zu beschaffende Waren und/oder Dienstleistungen zur Zubereitung von Speisen und/oder Getränken bestimmenden Einrichtung (6) bestimmt werden und
die zu beschaffenden Waren und/oder Dienstleistungen wenigstens teilweise seitens der Anzeigeeinrichtung (12, 13) wiedergegeben werden.

2. System (1) nach Anspruch 1, **dadurch gekennzeichnet, dass** die Einrichtung (7) zur Bestimmung von Kosteninformationen für eine Bewirtung von Personen ein von einem Nutzer über eine Eingabeeinrichtung (14, 15) vorzugsweise bezogen auf eine Person einzugebendes Budget als Kosteninformation bestimmt.

3. System (1) nach Anspruch 1 oder Anspruch 2, **dadurch gekennzeichnet, dass** die Einrichtung (7) zur Bestimmung von Kosteninformationen für eine Bewirtung von Personen über eine Kommunikationsschnittstelle (10) mit einer Waren und/oder Dienstleistungen anbietenden Einrichtung verbindbar ist, welche Kosteninformationen zu angebotenen Waren und/oder Dienstleistungen über die Kommunikationsschnittstelle (10) bereitstellt.

4. System (1) nach Anspruch 2 oder Anspruch 3, **dadurch gekennzeichnet, dass** die Kommunikationsschnittstelle (10) der Einrichtung (10) zur Bestimmung von Kosteninformationen für eine Bewirtung von Personen ein Kommunikationsnetzwerk, vorzugsweise ein digitales Mobilfunknetzwerk gemäß einem GSM- und/oder UMTS-Funknetzstandard, nutzend ausgebildet ist.

5. System (1) nach einem der Ansprüche 1 bis 4, **dadurch gekennzeichnet, dass** die Informationen von Rezepten von Speisen und/oder Getränken Informationen hinsichtlich Thematiken einer Bewirtung, benötigter Waren und/oder Dienstleistungen von Speisen und/oder Getränken von Rezepten, Mengenangaben benötigter Waren und/oder Dienstleistungen von Speisen und/oder Getränken von Rezepten, vorzugsweise bezogen auf eine Person, und/oder einer zeitlichen Dauer der Zubereitung von Speisen und/oder Getränken von Rezepten umfassen.

6. System (1) nach einem der Ansprüche 1 bis 5, **dadurch gekennzeichnet, dass** die personenbezogenen Informationen von zu bewirtenden Personen Informationen hinsichtlich Anzahl von Personen, Anlass einer Bewirtung, Vorlieben hinsichtlich der Bewirtung, einer zeitlichen Dauer der Bewirtung und/oder Datum und/oder Uhrzeit der Bewirtung umfassen.

7. System (1) nach einem der vorhergehenden Ansprüche, **dadurch gekennzeichnet, dass** wenigstens die Anzeigeeinrichtung (12, 13), die Eingabeeinrichtung (14, 15) und/oder die Kommunikationsschnittstelle (10) des Systems (1) von einem in einem Mobilfunknetz betreibbaren mobilen Endgerät (11) bereitgestellt sind.
